Europäisches Patentamt

European Patent Office

Office européen des brevets

(19)

(11) Numéro de publication : **0 152 709**
**B1**

(12)

# FASCICULE DE BREVET EUROPÉEN

(45) Date de publication du fascicule du brevet :
09.09.87

(51) Int. Cl.⁴ : **F 16 K 17/40**

(21) Numéro de dépôt : 84402440.6

(22) Date de dépôt : 29.11.84

(54) Dispositif pyrotechnique de destruction d'un opercule et application à la réalisation d'un ensemble d'obturation temporaire.

(30) Priorité : 23.12.83 FR 8320636

(43) Date de publication de la demande :
28.08.85 Bulletin 85/35

(45) Mention de la délivrance du brevet :
09.09.87 Bulletin 87/37

(84) Etats contractants désignés :
CH DE GB IT LI

(56) Documents cités :
FR-A- 1 095 100
FR-A- 1 147 005
FR-A- 2 185 767
FR-A- 2 502 729
US-A- 4 046 156
US-A- 4 188 856

(73) Titulaire : Société PYROMECA
Chemin de la Roquette
F-83000 Toulon (FR)

(72) Inventeur : Bonet, Jean-Pierre
La Pascalière Avenue du 11 Novembre
F-83160 La Valette du Var (FR)
Inventeur : Lagas, Gérard
Le Rocasson B.P. 99
F-84400 APT (FR)

(74) Mandataire : Pech, Bernard et al
Sté nationale des poudres et explosifs 12, quai Henri IV
F-75181 Paris Cédex 04 (FR)

Jouve, 18, rue St-Denis, 75001 Paris, France

## Description

La présente invention se rapporte au domaine de la sécurité et permet l'ouverture quasi instantanée d'un conduit ou d'une enceinte, notamment sous pression, afin de permettre la circulation d'un fluide après rupture de l'opercule de fermeture temporaire de ce conduit ou de cette enceinte.

De tels dispositifs pyrotechniques de destruction d'un opercule sont déjà connus mais ils sont adaptés à la rupture d'opercules ou de membranes obturant des ouvertures d'enceinte, ou des conduits, de petits diamètres. Les documents FR-A-2 502 729 et US-A-4 046 156 décrivent par exemple des sorties d'appareils d'extinction d'incendie, qui utilisent des charges explosives dont l'onde de choc provoque la rupture de l'opercule de fermeture étanche. Par ailleurs, la destruction d'un opercule par projection d'une masse de percussion propulsée par une charge pyrotechnique est également connue, par exemple par les documents US-A-4 188 856 et FR-A-2 185 767.

Si la projection latérale d'une masse permet la destruction d'un opercule en verre trempé (FR-A-2 185 767) dont les fragments sont facilement éliminés dans le conduit d'acheminement d'un fluide, et si une telle réalisation permet de laisser totalement libre la section de passage du conduit, il n'en est par contre pas de même lorsque la masse de percussion est centrée sur l'opercule à rompre (US-A-4 188 856) car cette masse obture partiellement le conduit d'évacuation du fluide, à moins que ne soient prévus, soit un retour en position initiale de cette masse, soit une éjection dans un réceptacle hors du conduit, ces fonctions supplémentaires compliquant alors l'ensemble d'obturation temporaire utilisant un tel dispositif pyrotechnique de destruction d'un opercule. Par rapport à la technique de la projection centrale d'une masse de percussion, l'utilisation d'un opercule en verre trempé présente les avantages exposés ci-dessus mais il faut noter, que de tels opercules ne sont que difficilement utilisables pour des conduits de grands diamètres et, ou, contenant un fluide à haute pression, et que de plus le maintien d'une étanchéité absolue après destruction de l'opercule pose de délicats problèmes, l'obtention de cette fonction supplémentaire d'étanchéité compliquant alors l'ensemble d'obturation temporaire comportant un tel dispositif pyrotechnique de destruction d'un opercule.

En ce qui concerne l'utilisation de charges explosives évoquée ci-dessus, si cette technique conduit a priori à des solutions mécaniquement simples, il faut noter également qu'une telle technique est difficilement adaptable à des conduits de grands diamètres et, ou contenant un fluide à haute pression, car la résistance de l'opercule impose alors de créer une onde de choc d'une telle violence que les effets secondaires sont difficiles à maîtriser, peu de réseaux de fluide ou d'enceintes de stockage étant capables d'encaisser une telle surpression, notamment lorsque le fluide est un liquide dont l'incompressibilité entraîne la transmission d'un coup de bélier à toute l'installation. De plus, même lorsque le conduit ne présente qu'un faible diamètre et ne contient qu'un fluide stocké à une pression de quelques bars, ce qui est le cas pour des extincteurs, il est alors nécessaire soit de prévoir un conduit de très forte épaisseur qui resiste à l'onde de détonation (US-A-4 046 156) soit de prévoir un orifice d'échappement et, ou un piston d'amortissement de l'onde de détonation, (FR-A-2 502 729), prévisions qui compliquent alors l'ensemble d'obturation temporaire comportant un tel dispositif pyrotechnique de destruction d'un opercule.

La présente invention a pour but d'être utilisée quelles que soient les dimensions du conduit et la pression du fluide, cela en laissant la plus grande section de passage à ce fluide et en facilitant l'évacuation d'un simple opercule, tout en minimisant les effets de surpression appliquée au fluide présent dans le conduit. L'invention se caractérise en ce que le corps creux du dispositif pyrotechnique de destruction d'un opercule, est au moins partiellement rempli d'éléments granulaires résistants qui sont interposés entre le chargement pyrotechnique et l'orifice d'éjection ménagé dans le corps creux, cet orifice étant dirigé vers l'opercule. Plus particulièrement, le chargement comporte une charge génératrice de gaz, notamment une charge de poudre propulsive à base de nitrocellulose.

Préférentiellement, d'une part, une bourre est interposée entre le chargement pyrotechnique et les éléments granulaires, ce qui améliore la propulsion de ces éléments et limite l'angle solide de dispersion, et, d'autre part, les éléments granulaires sont métalliques, de la grenaille de zinc ou des découpes de poinçonnage de tôle pouvant convenir, mais l'utilisation de simples plombs de chasse étant possible malgré la malléablilité de ce matériau.

Selon un mode particulier de réalisation, le corps creux du dispositif est muni d'un orifice d'éjection qui est disposé latéralement et qui présente sensiblement le même diamètre que le diamètre interne du corps creux.

La projection progressive des éléments granulaires est d'autant mieux réalisée que l'alésage du corps creux utilisé au stockage des éléments granulaires présente un grand élancement, et il est avantageux que cet élancement soit au moins égal à deux afin de réduire la valeur instantanée maximale de la poussée sur l'opercule, l'énergie cinétique de chaque élément granulaire étant par contre suffisante pour crever cet opercule.

La présente invention vise également l'application d'un dispositif pyrotechnique de destruction, conforme aux caractéristiques exposées ci-dessus, à la réalisation d'un ensemble d'obturation temporaire comportant un opercule frangible, l'orifice d'éjection du dispositif pyrotechnique débouchant avantageusement dans une zone comportant un gaz. Préférentiellement, la distance entre l'opercule fangible et l'orifice d'éjection du dispositif pyrotechnique est comprise entre une fois et trois fois le diamètre interne du conduit, et, selon une forme particulière de construction, lorsque le corps creux du dispositif est muni d'un orifice latéral d'éjection, celui-ci est positionné sensiblement tangent à la surface interne du conduit, et la face concave de l'opercule bombé est dirigée vers cet orifice.

Les avantages obtenus grâce à cette invention consistent essentiellement en ce que l'opercule est déchiqueté par les éléments granulaires projetés au moyen du chargement pyrotechnique, l'action de destruction de l'opercule étant étalée dans le temps par rapport à l'action brutale et immédiate, soit d'une onde de choc, soit d'une masse de percussion, puisque chaque élément granulaire, ou presque, perfore l'opercule lors de son impact. Ces différents impacts ne sont pas simultanés puisque les éléments sont éjectés sous forme d'un « nuage » dont l'enveloppe divergente est sensiblement conique, ce nuage étant d'autant plus allongé que l'alésage du corps creux dans lequel sont logés les éléments granulaires présente lui-même un grand élancement.

Dans ce qui suit, l'invention est exposée plus en détail à l'aide d'un dessin pour lequel :

La figure 1 représente en coupe axiale un premier ensemble d'obturation temporaire dont le dispositif pyrotechnique de destruction est monté latéralement hors du liquide stocké sous pression.

La figure 2 représente en coupe axiale un second ensemble d'obturation temporaire dont le dispositif pyrotechnique de destruction est monté axialement dans le gaz pressurisé.

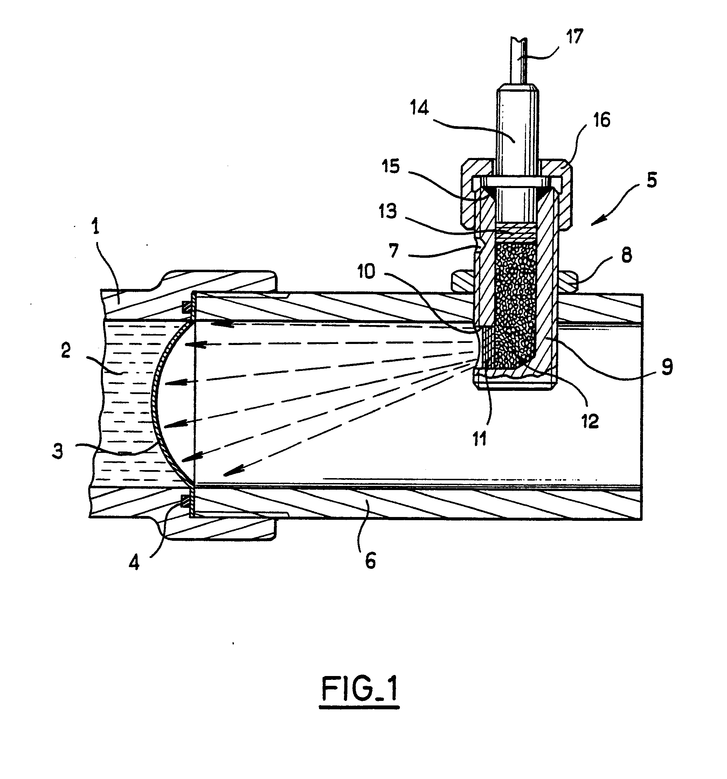

En se référant à la figure 1, représentée sensiblement à l'échelle 1, le conduit (1) d'expulsion du liquide (2) est raccordé à une enceinte de stockage pressurisée à 60 bars, l'opercule (3) réalisé en acier inoxydable d'une épaisseur de 0,16 mm étant calculé pour résister jusqu'à une pression de 90 bars. L'étanchéité est assurée par un joint torique (4) engagé dans la gorge ménagée sur la portée de serrage de l'opercule bombé dont la face concave est dirigée vers l'extérieur, et cet opercule (3) est immobilisé par le support du dispositif pyrotechnique de destruction (5), ce support correspondant dans l'exemple de la figure 1 à une tubulure (6) prolongeant le conduit (1) et vissé à l'intérieur de celui-ci.

Cette tubulure comporte un taraudage latéral situé sensiblement à une distance, de la portée de serrage de l'opercule (3), égale à deux fois le diamètre interne de la tubulure, ce diamètre étant lui-même égal au diamètre interne du conduit (1). Le dispositif pyrotechnique de destruction (5) est vissé dans ce taraudage latéral, orienté vers l'opercule (3) au moyen du repère constitué par une légère amorce de perçage (7) et bridé par un contre écrou (8).

Ce dispositif pyrotechnique est usiné dans une tige filetée en acier qui est percée axialement pour constituer le corps creux (9), ce perçage ne débouchant pas à l'autre extrémité et l'orifice d'éjection (10) latéral étant obtenu par un perçage orthogonal de même diamètre qui débouche dans le perçage axial. Cet orifice d'éjection est obturé par un opercule (11) constitué par une rondelle en néoprène d'une épaisseur de 3 mm, qui est directement collée sur le corps creux. La portion de l'alésage du corps creux utilisée au stockage de 8 grammes de plombs (12) de chasse d'un diamètre moyen de 1,5 millimètre est alors remplie, et une bourre (13) constituée par une rondelle en néoprène d'une épaisseur de 4 millimètres est placée au-dessus des plombs. Le chargement pyrotechnique (14) est alors engagé dans l'alésage central du corps creux et enserre un joint d'étanchéité (15), ce chargement étant solidarisé au corps creux (9) au moyen de l'écrou épaulé (16). Le chargement pyrotechnique est constitué par une cartouche pyrotechnique métallique qui comporte une traversée étanche pour le passage des fils électriques (17) de mise à feu, qui sont connectés à l'intérieur à un inflammateur renforcé par 50 milligrammes de poudre noire, la charge principale génératrice de gaz étant constituée par 50 milligrammes de poudre propulsive à base de nitrocellulose du type brin de poudre B présentant 7 trous.

Le dispositif pyrotechnique de destruction (5) ne pénètre dans la tubulure (6) que d'une manière limitée, de façon à ce que l'orifice latéral d'éjection (10) des plombs soit sensiblement tangent à la surface interne de cette tubulure. Malgré cette position désaxée de l'orifice d'éjection, le faisceau de plombs est suffisamment déporté vers le bas, du fait de la trajectoire coudée de ces plombs à l'intérieur du corps creux, pour que ce faisceau intercepte la totalité de la face concave de l'opercule (3), et pour que la répartition des plombs dans ce faisceau en forme de cône non de révolution soit sensiblement homogène. L'angle d'incidence des plombs sur la tubulure (6) est d'autant plus faible que la distance entre l'opercule et le dispositif pyrotechnique de destruction augmente, mais dès une distance égale sensiblement à 1,5 fois le diamètre interne l'incidence est suffisamment faible pour qu'il ne se produise aucune altération de la surface interne d'une tubulure en bronze ou en acier, notamment lorsque les éléments granulaires sont en plomb. L'utilisation d'un tel dispositif pyrotechnique ayant un orifice d'éjection latérale conduit à une plus grande dispersion de la valeur de l'énergie cinétique de chaque élément granulaire, et il est donc très souhaitable dans ce cas que la concavité de l'opercule soit bien dirigée vers cet orifice d'éjection, afin d'éviter que les plombs n'arrivent au contact de la partie basse de l'opercule (3) avec une incidence trop rasante qui ne permettrait pas de crever l'opercule.

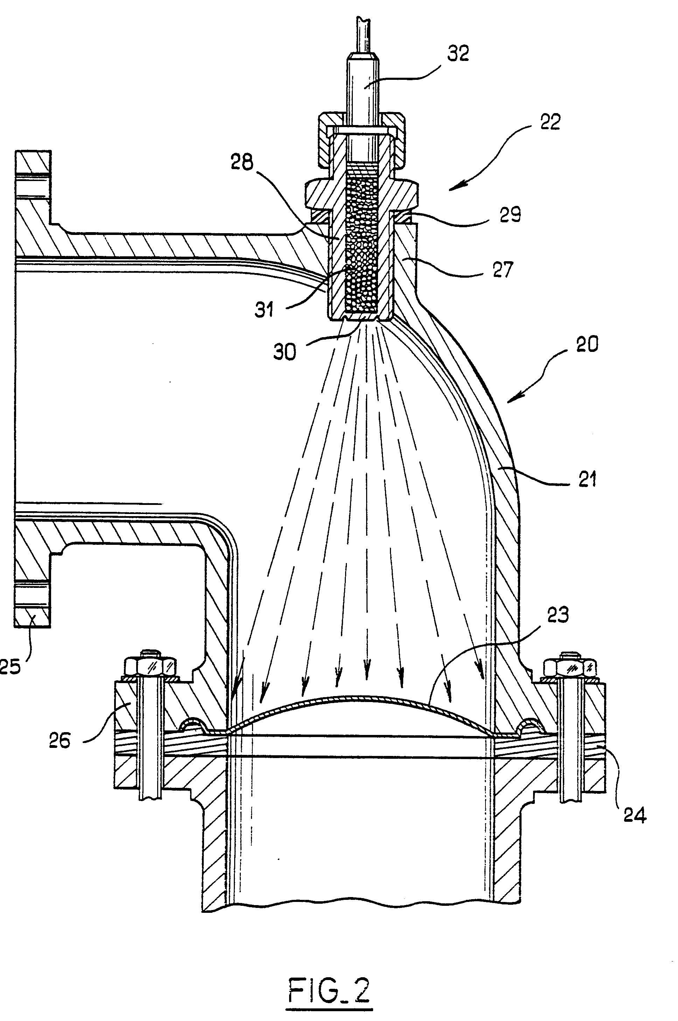

La figure 2 correspond à un second exemple de réalisation représenté sensiblement à l'échelle 1, et l'ensemble d'obturation temporaire (20) correspond à un coude de conduit (21) équipé du dispositif pyrotechnique de destruction (22) et de l'opercule (23) maintenu par une contre plaque (24). Le coude se termine de chaque côté par des brides circulaires de raccordement, la bride (25) étant raccordée à un réseau de gaz pressurisé, et la bride (26) étant raccordée à un circuit de vidange utilisable en cas de détection d'anomalies de fonctionnement au niveau du réseau de gaz. Le coude (21) comporte un bossage extérieur (27) concentrique à la bride (26), le corps creux (28) fileté du dispositif pyrotechnique étant vissé dans le taraudage central du bossage, et la collerette hexagonale de ce corps creux comprimant un joint d'étanchéité (29) interpose entre la face du bossage et cette collerette. Le corps creux (28) comporte un alésage central borgne dont le fond est dressé, la face externe de l'extrémité de ce corps creux étant elle-même dressée et entaillée par une rainure circulaire à flancs ouverts, de manière à constituer une amorce de rupture du fond (30) du corps creux qui constitue un opercule intégré. La portion d'alésage du corps creux utilisé au stockage des plombs (31) présente un élancement d'une valeur de 4 qui permet une bonne répartition dans le temps des impacts des différents plombs qui perforent l'opercule (23) et arrivent presque à le déchiqueter complètement. Le chargement pyrotechnique (32) est constitué par une cartouche génératrice de gaz semblable à la cartouche définie dans l'exemple précédent.

**Revendications**

1. Dispositif pyrotechnique de destruction (5-22) d'un opercule (323) obturant un conduit (1-21), ce dispositif comprenant un corps creux (9-28) dans lequel est placé un chargement pyrotechnique (14-32) initiable de l'extérieur, ce corps creux comportant un orifice dirigé vers l'opercule, caractérisé en ce que le corps creux est au moins partiellement rempli d'éléments granulaires (12-31) résistants qui sont interposés entre ledit chargement pyrotechnique (14-32) et l'orifice d'éjection (10).

2. Dispositif pyrotechnique selon la revendication 1, caractérisé en ce que le chargement pyrotechnique (14-32) comporte une charge génératrice de gaz.

3. Dispositif pyrotechnique selon la revendication 2, caractérisé en ce que la charge génératrice de gaz utilise une poudre propulsive à base de nitrocellulose.

4. Dispositif pyrotechnique selon la revendication 1, caractérisé en ce qu'une bourre (13) est interposée entre le chargement pyrotechnique (14) et les éléments granulaires (12).

5. Dispositif pyrotechnique selon l'une quelconque des revendications précédentes, caractérisé en ce que les éléments granulaires (12-31) sont métalliques.

6. Dispositif pyrotechnique selon la revendication 5, caractérisé en ce que les éléments granulaires sont des plombs de chasse.

7. Dispositif pyrotechnique selon l'une quelconque des revendications précédentes, caractérisé en ce que le corps creux (9) est muni d'un orifice d'éjection (10) disposé latéralement.

8. Dispositif pyrotechnique selon l'une des revendications précédentes, caractérisé en ce que la portion d'alésage du corps creux (9-28) utilisée pour le stockage des éléments granulaires (12-31) présente un élancement au moins égal à deux.

9. Application d'un dispositif pyrotechnique de destruction (5-22), conforme à l'une quelconque des revendications précédentes, à la réalisation d'un ensemble d'obturation temporaire (20) comportant un opercule frangible (3-23).

10. Application selon la revendication 9, caractérisée en ce que l'orifice d'éjection (10) du dispositif pyrotechnique (5) débouche dans une zone comportant un gaz.

11. Application selon l'une quelconque des revendications 9 ou 10, caractérisée en ce que l'opercule (3) est bombé, la face concave étant dirigée vers le dispositif pyrotechnique de destruction (5).

12. Application selon l'une des revendications 9 à 11, caractérisée en ce que la distance entre l'opercule frangible (3-23) et l'orifice d'éjection (10) du dispositif pyrotechnique de destruction est comprise entre une fois et trois fois le diamètre interne du conduit (1-21).

13. Application selon l'une des revendications 9 à 12, caractérisée en ce que le dispositif pyrotechnique de destruction comporte un corps creux (9) qui est muni d'un orifice latéral d'éjection (10) sensiblement tangent à la surface interne du conduit (1, 6).

**Claims**

1. A pyrotechnic destruction device (5-22) for a cover (3-23) obturating a conduit (1-21), this device comprising a hollow body (9-28) in which is placed a pyrotechnic filling (14-32) externally initiatable, this hollow body comprising an orifice directed towards the cover, characterised in that the hollow body is at least partially filled with resistant granular elements (12-31) which are interposed between said pyrotechnic filling (14-32) and the ejection orifice (10).

2. A pyrotechnic device according to claim 1, characterised in that the pyrotechnic filling (14-32) includes a gas generating charge.

3. A pyrotechnic device according to claim 2, characterised in that the gas generating charge uses a propellant powder based on nitrocellulose.

4. A pyrotechnic device according to claim 1, characterised in that a plug (13) is interposed between the pyrotechnic filling (14) and the granular elements (12).

5. A pyrotechnic device according to any one of the preceding claims, characterised in that the granular elements (12-31) are metallic.

6. A pyrotechnic device according to claim 5, characterised in that the granular elements are lead shot.

7. A pyrotechnic device according to any one of the preceding claims, characterised in that the hollow body (9) is provided with a laterally disposed ejection orifice (10).

8. A pyrotechnic device according to any one of the preceding claims, characterised in that the bored portion of the hollow body (9-28) used for the storage of the granular elements (12-31) has a narrowness ratio at least equal to two.

9. Application of a pyrotechnic destruction device (5-22) in accordance with any one of the preceding claims for the manufacture of a temporary obturation assembly (20) including a frangible cover (3-23).

10. Application according to claim 9, characterised in that the ejection orifice (10) of the pyrotechnic device (5) opens into a zone including a gas.

11. Application according to either one of claims 9 or 10, characterised in that the cover (3) is curved, the concave face being directed towards the pyrotechnic destruction device (5).

12. Application according to any one of claims 9 to 11, characterised in that the distance between the frangible cover (3-23) and the ejection orifice (10) of the pyrotechnic destruction device is between one and three times the internal diameter of the conduit (1-21).

13. Application according to any one of claims 9 to 12, characterised in that the pyrotechnic destruction device includes a hollow body (9) which is provided with a lateral ejection orifice (10) substantially tangential to the internal surface of the conduit (1, 6).


**Patentansprüche**

1. Pyrotechnische Einrichtung (5-22) zur Zerstörung einer Abdichtscheibe (3-23), die eine Leitung (1-21) abdichtet, wobei die Einrichtung einen Hohlkörper (9-28) aufweist, in dem eine pyrotechnische Ladung (14-32) angeordnet ist, die von außen zündbar ist, wobei der Hohlkörper eine zur Abdichtscheibe hin gerichtete Öffnung aufweist, dadurch gekennzeichnet, daß der Hohlkörper mindestens teilweise mit widerstandsfähigen Granulatelementen (12-31) gefüllt ist, die zwischen der pyrotechnischen Ladung (14-32) und der Ausstoßöffnung (10) angeordnet sind.

2. Vorrichtung nach Anspruch 1, dadurch gekennzeichnet, daß die pyrotechnische Ladung (14-32) eine gaserzeugende Füllung enthält.

3. Vorrichtung nach Anspruch 2, dadurch gekennzeichnet, daß die gaserzeugende Füllung ein Sprengpulver auf Nitrocellulosebasis ist.

4. Vorrichtung nach Anspruch 1, dadurch gekennzeichnet, daß ein Pfropf (13) zwischen der pyrotechnischen Ladung (14) und den Granulatelementen (12) angeordnet ist.

5. Vorrichtung nach einem der vorstehenden Ansprüche, dadurch gekennzeichnet, daß die Granulatelemente (12-31) aus Metall bestehen.

6. Vorrichtung nach Anspruch 5, dadurch gekennzeichnet, daß die Granulatelemente aus Jagdpatronenblei bestehen.

7. Vorrichtung nach einem der vorstehenden Ansprüche, dadurch gekennzeichnet, daß der Hohlkörper (9) mit einer seitlich angeordneten Ausstoßöffnung (10) versehen ist.

8. Vorrichtung nach einem der vorstehenden Ansprüche, dadurch gekennzeichnet, daß der Ausnehmungsteil des Hohlkörpers (9-28), der zur Speicherung der Granulatelemente (12-31) verwendet wird, einen Schlankheitsgrad von mindestens zwei aufweist.

9. Anwendung einer pyrotechnischen Zerstörungseinrichtung (5-22) nach einem der vorstehenden Ansprüche bei der Herstellung einer Anordnung zum zeitweiligen Verschließen (20) mit einer zerstörbaren Abdichtscheibe (3-23).

10. Anwendung nach Anspruch 9, dadurch gekennzeichnet, daß die Ausstoßöffnung (10) der pyrotechnischen Vorrichtung (5) in einem Bereich mündet, der ein Gas aufweist.

11. Anwendung nach einem der Ansprüche 9 oder 10, dadurch gekennzeichnet, daß die Abdichtscheibe (3) gewölbt ist, wobei die konkave Fläche auf die pyrotechnische Einrichtung (5) hinzeigt.

12. Anwendung nach einem der Ansprüche 9 bis 11, dadurch gekennzeichnet, daß der Abstand zwischen der zerstörbaren Abdichtscheibe (3-23) und der Ausstoßöffnung (10) der pyrotechnischen Zerstörungsvorrichtung ein- bis dreimal so groß ist wie der Innendurchmesser der Leitung (1-21).

13. Anwendung nach einem der Ansprüche 9 bis 12, dadurch gekennzeichnet, daß die pyrotechnische Zerstörungsvorrichtung einen Hohlkörper (9) aufweist, der mit einer seitlichen Ausstoßöffnung (10) versehen ist, die die Innenwand der Leitung (1, 6) leicht berührt.

## FIG.1

FIG_2